# EUROPÄISCHE PATENTANMELDUNG

(11) **EP 3 878 565 A2**
(43) Veröffentlichungstag der Anmeldung: **15.09.2021**
(21) Anmeldenummer: 21161160.3
(22) Anmeldetag: 08.03.2021
(51) Int. Cl.: B05D 1/28, B05D 1/06, B05D 3/12, B05D 3/02, B05D 5/00, B05D 7/02, B29C 37/00

(54) **VERFAHREN ZUR HERSTELLUNG EINES INNENVERKLEIDUNGSBAUTEILS FÜR EIN FLUGZEUG SOWIE INNENVERKLEIDUNGSBAUTEIL**

(30) Priorität: 11.03.2020 DE 102020001595
(71) Anmelder: Diehl Aviation Laupheim GmbH, 88471 Laupheim (DE)
(72) Erfinder: Grün, Mathias, 89415 Lauingen (DE); Steinmayer, Marc, 88400 Biberach an der Riss (DE)
(74) Vertreter: Diehl Patentabteilung

(57) **Zusammenfassung**

Es ist Aufgabe der vorliegenden Erfindung, ein verbessertes Verfahren zur Herstellung eines Innenverkleidungsbauteils für ein Flugzeug vorzuschlagen, wobei das Innenverkleidungsbauteil eine Lackschicht auf einer Sichtseite aufweist.

Hierzu wird ein Verfahren zur Herstellung eines Innenverkleidungsbauteils 1 vorgeschlagen, wobei in einem Werkzeug 2 eine Werkzeugfläche 4 mit einem formlosen Lack zur Bildung eines Schichtabschnitts 5 bedeckt wird, wobei der formlose Lack nach einer Aushärtung eine Sichtseite des Innenverkleidungsbauteils 1 bildet, wobei in das Werkzeug 2 ein Halbfabrikat 7 des Innenverkleidungsbauteils 1 eingelegt und ohne das Halbfabrikat (7) dabei umzuformen mit dem Schichtabschnitt 5 verbunden wird, um das Innenverkleidungsbauteil 1 zu bilden.

## Beschreibung

Die Erfindung betrifft ein Verfahren zur Herstellung eines Innenverkleidungsbauteils für ein Flugzeug mit den Merkmalen des Anspruchs 1. Die Erfindung betrifft auch ein entsprechendes Innenverkleidungsbauteil.

Komponenten für Mobile müssen neben ihren funktionalen Eigenschaften auch ästhetische Eigenschaften aufweisen, damit diese wettbewerbsfähig sind. Insbesondere die Oberflächengestaltung von Komponenten ist sowohl hinsichtlich der funktionalen Eigenschaften als auch der ästhetischen Eigenschaften wichtig. So ist es notwendig, dass die Oberflächengestaltung zum Beispiel reinigungsfähig ist oder besondere Reibeigenschaften als funktionale Eigenschaften aufweist. Daneben spielt die von einem Nutzer wahrgenommene Textur oder Farbe eine wichtige Rolle für die Akzeptanz der Komponente.

Vor diesem Hintergrund ist eine Vielzahl von Verfahren zur Oberflächengestaltung entwickelt worden, welche auch in Abhängigkeit der funktionalen Eigenschaften der Komponente eingesetzt werden. So ist es beispielsweise bekannt, eine Oberfläche mit einer Folie zu versehen, um die Oberfläche zu gestalten. Es ist auch bekannt, in einem Spritzwerkzeug eine Werkzeugoberfläche mit einer Textur zu versehen, so dass die fertig gestellte Komponente eine texturierte Oberfläche erhält.

Eine komplexere Verfahrenskombination wird durch das PiMC-Verfahren (Powder in-Mould Coating) umgesetzt wie dies beispielsweise von dem Unternehmen Raschig GmbH beworben wird. Bei diesem Verfahren wird eine Werkzeugoberfläche zunächst mit einem Pulverlack versehen und dieser Pulverlack durch Wärmeeintrag teilweise vernetzt. Nachfolgend wird ein Faser-Halbzeug (SMC/BMC) in das Werkzeug eingelegt und umgeformt, so dass dieses an eine Kontaktseite des teilvernetzten Pulverlacks zur Anlage kommt.

Es ist Aufgabe der vorliegenden Erfindung, ein verbessertes Verfahren zur Herstellung eines Innenverkleidungsbauteils für ein Flugzeug vorzuschlagen, wobei das Innenverkleidungsbauteil eine Lackschicht auf einer Sichtseite aufweist.

Diese Aufgabe wird durch ein Verfahren mit den Merkmalen des Anspruchs 1 sowie durch ein Innenverkleidungsbauteil mit den Merkmalen des Anspruchs 14 gelöst. Bevorzugte oder vorteilhafte Ausführungsformen der Erfindung ergeben sich aus den Unteransprüchen, der nachfolgenden Beschreibung sowie den beigefügten Figuren.

Der Gegenstand der Erfindung ist ein Verfahren zur Herstellung eines Innenverkleidungsbauteils. Das Innenverkleidungsbauteil weist eine Sichtseite auf.

Bei dem Verfahren wird ein Werkzeug verwendet. Das Werkzeug weist eine Werkzeugfläche auf, wobei die Werkzeugfläche eine Wirkfläche bildet. Die Werkzeugfläche ist insbesondere als eine texturierte Werkzeugfläche ausgebildet, das heißt mit Texturen ausgebildet.

Das Werkzeug ist bei einer ersten Möglichkeit als Teil, insbesondere als eine Formhälfte eines Vakuumaufbaus ausgebildet. Bei einer zweiten Möglichkeit ist das Werkzeug als ein Pressenwerkzeug ausgebildet, welches durch eine Presskraft aus einer Presse, insbesondere einer weggebundenen, kraftgebundenen oder energiegebundenen Presse, betätigt wird.

Es ist vorgesehen, dass die Werkzeugfläche mit einem formlosen Lack bedeckt wird, um einen Schichtabschnitt zu bilden. Hierfür kommen sämtliche für die betreffenden Innenverkleidungsbauteile geeigneten Lacke in Frage, siehe z.B. Wikipedia, "Lack", Internetlexikon, Fassung vom 25.10.2019. Der Lack kann flüssig oder als Pulver ausgebildet sein. Vorzugsweise bedeckt der Lack die Werkzeugfläche durchgehend. Der formlose Lack bildet nach einer Aushärtung die Sichtseite des Innenverkleidungsbauteils. Die Aushärtung kann - wie nachfolgend erläutert wird - zu verschiedenen Zeitpunkten erfolgen. Die Aushärtung kann beispielsweise durch Erwärmung des Schichtabschnitts umgesetzt und/oder gefördert werden. Insbesondere weist die Sichtseite die abgeformten Texturen der Werkzeugfläche auf. Die Texturen beeinflussen hierbei lediglich den Lack, das darunterliegende Halbfabrikat bzw. dessen Oberfläche wird durch die Texturen nicht beeinflusst, insbesondere nicht umgeformt / urgeformt bzw. sonst in seiner Form verändert. Mit "umformen / urformen" sollen alle formgebenden Verfahren angesprochen sein. Insbesondere sind Texturen an der Werkzeugfläche daher nur im Bereich des Lacks bzw. Schichtabschnitts vorgesehen "Formlos" bedeutet dabei nicht, dass Elementarteilchen des Lacks, z.B. Pulverpartikel oder Flüssigkeitstropfen keine Form aufweisen würden. "Formlos" bedeutet vielmehr, dass der Lack als solches bzw. in seiner Gesamtheit keine feste Form, z.B. als Folie oder Block, aufweist, sondern eben als Gegenstand vorliegt, der eben selbst keine Form aufweist. Eine Form erhält der Lack erst durch seine Anlage bzw. Auflage auf einer Fläche, hier insbesondere der Werkzeugfläche. Der Schichtabschnitt (Lack) weist dann eine Form auf, die der Kontur der Werkzeugfläche folgt.

In das Werkzeug wird ein Halbfabrikat des Innenverkleidungsbauteils eingelegt und mit dem Schichtabschnitt verbunden, um das Innenverkleidungsbauteil zu bilden. Das Halbfabrikat wird dabei nicht umgeformt oder urgeformt. Das Halbfabrikat bildet beispielsweise einen Grundkörper des Innenverkleidungsbauteils. Der Schichtabschnitt bildet dann dessen Deckschicht.

Die Werkzeugfläche als "Wirkfläche" dient also dazu, den Lack bzw. den Schichtabschnitt passgenau und schonend an das Halbfabrikat anzulegen, nämlich dies zu "bewirken". Insbesondere liegt hierzu die Werkzeugfläche vollflächig am Halbfabrikat an (unter passgenauer Zwischenlage der Lackschicht), um den Lack vollflächig an dessen Oberfläche anzulegen bzw. anzudrücken.

Beispielsweise ist das Halbfabrikat als ein bereits vorgeformtes Sandwich-Bauteil ausgebildet. Bevorzugt weist das Sandwich-Bauteil mehrere Lagen auf. Bevorzugt weist das Sandwich-Bauteil eine oder mehrere Decklagen und/oder eine oder mehrere Rücklagen ausgebildet als Prepreg-Lagen und einen Honigwabenkern (Honeycomb Core) als Kernmaterial/Zwischenlage auf.

Alternativ kann das Halbfabrikat auch als vorgeformtes Schaumbauteil vorliegen. Das Schaumbauteil als Halbfabrikat kann sowohl eine zuvor umgeformte Schaumplatte (extrudierter Schaumblock: Schaumplatte als Schnittware) aber auch ein Formteil aus Partikelschaum aus einem Formteilautomaten darstellen. Auch kann das Halbfabrikat aus Schaum mit einer oder mehreren Decklagen und/oder mit einer oder mehreren Rücklagen verbunden sein. Somit kann auch ein Halbfabrikat aus Schaum als ein Sandwich- oder Halbsandwich-Bauteil vorliegen.

Eine Verbindungsseite des Halbfabrikats, welche mit dem Schichtabschnitt verbunden wird, ist bereits vor dem Einlegen des Halbfabrikats gefertigt, insbesondere geformt. Besonders bevorzugt ist das Halbfabrikat im Bereich der Verbindungsseite konturiert und/oder in der Endform des Innenverkleidungsbauteils ausgebildet. Die Fertigung des Halbfabrikats kann beispielsweise über ein Umformverfahren oder über ein Urformverfahren erfolgen oder diese Verfahrensschritte umfassen. Insbesondere weisen die Werkzeugfläche und das Halbfabrikat im Bereich der Verbindungsseite die gleiche Kontur auf. Sämtliche genannten Umform- oder Urformschritte erfolgen aber nicht im Rahmen des vorliegenden Verfahrens bzw. der Aufbringung des Lacks bzw. Schichtabschnitts. Sondern sämtliche Umform / Urformschritte finden außerhalb, insbesondere vor dem hier erläuterten Aufbringen der Lackschicht statt. So wird die Lackschicht nach dem Aufbringen nicht mehr mit dem Innenverkleidungsbauteil umgeformt, eine solche nachträgliche Umformung könnte deren Qualität verschlechtern.

Es kann vorgesehen sein, dass das Halbfabrikat mit Druck und/oder mit Temperatur beaufschlagt wird, so dass das Halbfabrikat mit dem Schichtabschnitt verbunden wird.

Der Erfindung liegt die Überlegung zugrunde, dass durch das Einbringen des formlosen Lacks zur Bildung des Schichtabschnitts eine funktionsgerechte und zugleich ästhetische Sichtseite des Innenverkleidungsbauteils gebildet wird. Um den Schichtabschnitt, insbesondere die Sichtseite des Innenverkleidungsbauteils, nicht durch Umformkräfte und/oder Urformkräfte zu beschädigen, sieht die Erfindung vor, dass der Grundkörper des Innenverkleidungsbauteils als Halbfabrikat in das Werkzeug eingelegt wird, das dann bei der Aufbringung der Lackschicht eben nicht umgeformt / urgeformt wird. Das Werkzeug dient daher lediglich dazu, den Schichtabschnitt schonend und passgenau an das Halbfabrikat anzubringen. Ein etwaiges Umformverfahren oder ein anderes formgebendes Verfahren, wie zum Beispiel ein Urformverfahren, wird vor dem Einlegen des Halbfabrikats in das Werkzeug umgesetzt. Damit kann der Schichtabschnitt und folglich die Sichtseite des Innenverkleidungsbauteils mit hoher Fertigungsqualität hergestellt werden.

Bei einer bevorzugten Ausgestaltung der Erfindung ist der Lack als ein Pulverlack ausgebildet. Der Pulverlack weist als Bestandteile insbesondere Bindemittel, Additive, bevorzugt Pigmente und optional ergänzend Füllstoffe auf. Besonders bevorzugt ist der Pulverlack als ein Hybridlack ausgebildet, bei dem Epoxid- und Polyesterharze als Bindemittel eingesetzt werden. Es ist jedoch auch möglich, dass andere Pulverlacke, umfassend Pulverklarlacke, eingesetzt werden.

Bei einer bevorzugten Ausgestaltung des Verfahrens ist der Lack vor dem Einlegen des Halbfabrikats teilausgehärtet. Bei einer Teilaushärtung wird der Lack üblicherweise mit Temperaturen von z.B. 100 °C beaufschlagt, so dass der Lack teilvernetzt und/oder geliert ist. Diese Ausgestaltung hat den Vorteil, dass das Halbfabrikat unmittelbar mit dem Schichtabschnitt, insbesondere ohne weitere Zwischenschichten verbunden werden kann, da der teilausgehärtete Schichtabschnitt eine Stoffschlussverbindung mit dem Halbfabrikat eingehen kann.

Insbesondere für den Fall, dass der Lack vollausgehärtet ist, jedoch nicht begrenzt darauf, ist es bevorzugt, dass ergänzend mindestens oder genau eine Zwischenschicht zur Bildung einer Stoffschlussverbindung zwischen dem Schichtabschnitt und dem Halbfabrikat verwendet wird. Gerade hier ist die Nutzung eines passgenauen Werkzeuges vorteilhaft, um die Lackschicht / Schichtabschnitt beschädigungsfrei und hochqualitativ am Halbfabrikat anzulegen oder ggf. anzupressen.

Es ist jedoch bei allen Varianten möglich, dass eine oder die Zwischenschicht, wobei es sich um genau eine Zwischenschicht oder mehrere Zwischenschichten handeln kann, verwendet wird, um die Stoffschlussverbindung zwischen dem Schichtabschnitt und dem Halbfabrikat herzustellen. Dabei kann die mindestens eine Zwischenschicht einen Teil des Schichtabschnitts bilden oder auf das Halbfabrikat aufgebracht werden oder zwischen dem Halbfabrikat und dem Schichtabschnitt eingelegt werden. Nachdem der Schichtabschnitt noch in dem Werkzeug angeordnet ist, ist es meist einfacher und daher bevorzugt, die Zwischenschicht ebenfalls im Werkzeug auf dem Schichtabschnitt anzuordnen.

Bei einer möglichen Weiterbildung der Erfindung ist die Zwischenschicht als ein vom oben genannten Lack verschiedener weiterer Pulverlack, umfassend Pulverklarlack, ausgebildet. So liegt - falls der o.g. Lack Pulverlack ist - auf der Werkzeugfläche zwar eine gesamte Pulverlackschicht vor, die jedoch streng genommen in zwei Teilschichten, nämlich den o.g. ersten und den hiervon verschiedenen weiteren Pulverlack aufgeteilt ist. Nachdem die Zwischenschicht zwischen dem Schichtabschnitt und dem Halbfabrikat angeordnet ist, ist diese üblicherweise von der Sichtseite betrachtet verdeckt. Damit ist es nicht notwendig, dass in der Zwischenschicht Pigmente vorgesehen sind, so dass ein Pulverklarlack ausreichend ist. Es ist bevorzugt, dass die Zwischenschicht ausgebildet als ein weiterer Pulverlack geliert und/oder teilvernetzt ist, wenn das Halbfabrikat mit dem Schichtabschnitt verbunden wird. In diesem Zustand kann die Stoffschlussverbindung besonders stabil hergestellt werden.

In einer bevorzugten, konkreten Ausgestaltung des Verfahrens wird in einem ersten Verfahrensschritt der formlose Lack als Pulverlack auf die Werkzeugfläche aufgebracht und danach ausgehärtet. Nach dieser Aushärtung wird wie folgt fortgefahren: In einem nachfolgenden Verfahrensschritt wird ein weiterer, im Unterschied zum vorherigen Pulverlack noch nicht ausgehärteter, insbesondere vom ersten verschiedener Pulverlack oder Pulverklarlack auf den Schichtabschnitt als Zwischenschicht aufgebracht und danach geliert und/oder teilvernetzt. In einem nachfolgenden Verfahrensschritt wird das Halbfabrikat auf die gelierte bzw. teilvernetzte Zwischenschicht aufgelegt, um dieses mit dem Schichtabschnitt zu verbinden.

Alternativ oder ergänzend zu der Zwischenschicht aus Pulverlack kann ein Klebstoff und/oder dünner Klebefilm als Zwischenschicht verwendet werden.

Alternativ oder ergänzend zu der Zwischenschicht aus Pulverlack oder Klebstoff kann als Zwischenschicht eine Prepreg-Schicht verwendet werden. Prepreg ist die englische Kurzform für preimpregnated fibres (amerikanisch: preimpregnated fibers), zu Deutsch: "vorimprägnierte Fasern". Hierbei ist es zum einen möglich, dass die Prepreg-Schicht bereits konturgebend auf das Halbfabrikat und/oder auf dem Schichtabschnitt im Werkzeug konturgebend vorlaminiert ist. Somit findet bei der Prepreg-Schicht kein konturgebender Prozess bei der Verbindung des Halbfabrikats mit dem Dekor bildenden Schichtabschnittes statt, so dass der Vorteil der schonenden Prozessführung ohne Umform- und/oder Urformkräfte auch für diese Alternative vollumfänglich erhalten bleibt. Alternativ hierzu wird die Prepreg-Schicht als Halbzeug, insbesondere als Flachmaterial oder Matte, zwischen dem Schichtabschnitt und dem Halbfabrikat eingelegt und bei dem stoffschlüssigen Verbinden an die Kontur des Schichtabschnitts und/oder des Halbfabrikats angepasst. Hierbei sind zumindest etwaige Umformkräfte reduziert, da das Halbfabrikat nicht umgeformt werden muss, so dass der Vorteil der schonenden Prozessführung auch für diese Alternative zumindest teilumfänglich erhalten bleibt. Auch hierbei wird also das Halbfabrikat nicht umgeformt / urgeformt. Lediglich die Prepreg-Schicht wird umgeformt. Die hierbei entstehenden Kräfte können jedoch so gering gehalten werden, dass eine Beeinträchtigung der Lack- / Zwischenschicht durch Umformkräfte nicht erfolgt (z.B. ausgehärtete Lackschicht / Schichtabschnitt, die stabil genug ist) oder tolerierbar ist. Im Sinne der Erfindung ist also auch diese Variante als "um- / urformungsfreier" Verbindungsprozess zwischen Halbfabrikat und Schichtabschnitt zu verstehen.

In einer bevorzugten, konkreten Ausgestaltung des Verfahrens wird in einem ersten Verfahrensschritt der formlose Lack als Pulverlack auf die Werkzeugfläche aufgebracht und danach ausgehärtet. In einem weiteren Verfahrensschritt wird eine Prepreg-Schicht als Zwischenschicht vorbereitet. Nach dem Aushärten (erster Verfahrensschritt) wird wie folgt fortgefahren: Die Prepreg-Schicht kann auf den Schichtabschnitt oder auf das Halbfabrikat auflaminiert werden oder als separate Lage zwischen dem Schichtabschnitt und dem Halbfabrikat eingelegt werden. Die dadurch gebildete Schichtenfolge wird unter Druck und Temperatur miteinander verbunden, um das Innenverkleidungsbauteil zu bilden.

Bei einer bevorzugten Ausgestaltung der Erfindung weist die Werkzeugfläche Texturen auf. Die Texturen können als Strukturen, geometrische Formen, geometrische Muster etc. ausgebildet sein. Die Texturen bilden ein Negativ, welches von dem Schichtabschnitt, insbesondere der Sichtseite des Schichtabschnitts, als Positiv abgeformt wird. Dadurch ist es möglich, die entsprechenden Texturen (spiegelverkehrt) auf das Innenverkleidungsbauteil aufzubringen. Besonders hervorzuheben ist, dass aufgrund der Tatsache, dass keine Umformung oder nur eine Umformung von dünnen Schichten (Prepreg als Halbfabrikat, siehe oben) in dem Werkzeug stattfindet, sondern das vorgeformte Halbfabrikat eingelegt wird, abrasive Umformkräfte auf den Schichtabschnitt und die Werkzeugtextur reduziert. Hieraus ergibt sich eine reproduzierbare Oberflächenqualität des Schichtabschnitts und eine langlebige Textur im Werkzeug. Hier ist nochmals zu betonen, dass sich die Texturen nur in die Lackschicht / den Schichtabschnitt, nicht jedoch in das Halbfabrikat einprägen. Insbesondere findet hier lediglich ein zumindest nahezu kraftfreies Ein- / Ausfließen von Lack in oder aus den Texturen statt, damit der Lack die Konturen der Texturen annimmt.

Als Grundwerkstoff für das Werkzeug kann beispielsweise Aluminium, Stahl und/oder CFK / GFK Materialien verwendet werden. Letztere erweisen sich als besonders vorteilig bei der Herstellung von Innenverkleidungsbauteilen mit kleinen Auflagen, da die Werkzeug- und notwendige Anlagenperipherie sich hier besonders kostengünstig darstellt. Werkzeuge aus Metall (Aluminium / Stahl) sind dagegen aufgrund ihrer Langlebigkeit und der beschleunigten Prozessführung bei großen Auflagen von Innenverkleidungsbauteilen vorteilig.

Bei einer bevorzugten Umsetzung des Verfahrens weist das Werkzeug ein Einsatzteil auf, wobei das Einsatzteil die Werkzeugfläche bildet. Durch den Austausch des Einsatzteils können somit unterschiedliche Texturen auf das Innenverkleidungsbauteil aufgebracht werden, was die Variabilität des Verfahrens erhöht. Es ist möglich, dass das Einsatzteil eine Keramikschicht aufweist oder als Keramikbauteil mit der Keramikschicht ausgebildet ist, wobei die Keramikschicht die Werkzeugfläche bildet. Damit ist das Werkzeug besonders widerstandsfähig und zugleich variabel ausgebildet.

Ein weiterer Gegenstand der Erfindung wird durch ein Innenverkleidungsbauteil für ein Flugzeug gebildet, wobei das Innenverkleidungsbauteil einen Grundkörper und einen Schichtabschnitt aufweist. Der Grundkörper ist aus einem Halbfabrikat gebildet. Bei manchen Ausführungsformen kann der Grundkörper durch das Halbfabrikat dargestellt werden, es ist jedoch auch möglich, dass an dem Halbfabrikat noch weitere Arbeitsgänge durchgeführt werden, um den Grundkörper zu bilden. Es ist vorgesehen, dass der Schichtabschnitt als eine Lackschicht ausgebildet ist, wobei eine Sichtseite der Lackschicht einen Abdruck einer Werkzeugfläche aufweist. Darunter ist zu verstehen, dass die Werkzeugoberfläche als Negativform die Lackschicht als Positivform ergibt. Die Form der Lackschicht nach der Fertigung ist also ein Formabbild der Werkzeugoberfläche. Dies schließt insbesondere die Abformung von Negativ-Texturen der Werkzeugoberfläche als Positivtexturen in der Lackoberfläche bzw. der Lackschicht bzw. dem Schichtabschnitt ein. Das Halbfabrikat weist eine Verbindungsseite auf, wobei der Schichtabschnitt mit der Verbindungsseite des Halbfabrikats mittelbar oder unmittelbar verbunden ist. Bereiche außerhalb der Verbindungsseite können nachträglich noch bearbeitet werden, um das Halbfabrikat in den Grundkörper überzuführen. Die Verbindungsseite selbst, soweit diese durch den Schichtabschnitt belegt ist, wird bevorzugt nicht mehr bearbeitet. Alternativ oder ergänzend wird beansprucht, dass das Innenverkleidungsbauteil nach einer der Verfahrensvarianten gefertigt ist, wie diese zuvor beschrieben wurden.

Bei einer bevorzugten konstruktiven Ausgestaltung der Erfindung weist der Schichtabschnitt ohne etwaige Zwischenschichten eine Dicke von weniger als 140 µm auf. Diese Dicke ergibt sich zum einen aus Brandschutzgründen und zum anderen aus Gründen bei der Umsetzung des Verfahrens. Besonders bevorzugt ist das Innenverkleidungsbauteil als ein Wandpaneel für den Innenraum des Flugzeugs realisiert.

Weitere Merkmale, Wirkungen und Vorteile der Erfindung ergeben sich aus der nachfolgenden Beschreibung eines bevorzugten Ausführungsbeispiels der Erfindung sowie der beigefügten Figuren. Dabei zeigen:
Figur 1a eine schematische Darstellung eines Verfahrens zur Herstellung eines Innenverkleidungsbauteils als Ausführungsbeispiel der Erfindung;
Figur 1b ein Flussdiagramm zu dem Verfahren in der Figur 1a;
Figur 2a eine schematische Darstellung eines Verfahrens zur Herstellung eines Innenverkleidungsbauteils als weiteres Ausführungsbeispiel der Erfindung;
Figur 2b ein Flussdiagramm zu dem Verfahren in der Figur 2a;
Figur 3a eine schematische Darstellung eines Verfahrens zur Herstellung eines Innenverkleidungsbauteils als weiteres Ausführungsbeispiel der Erfindung;
Figur 3b ein Flussdiagramm zu dem Verfahren in der Figur 3a;
Figur 4a eine schematische Draufsicht auf ein Innenverkleidungsbauteil, welches über das zuvor beschriebenen Verfahren hergestellt ist;
Figur 4b ein Querschnitt durch das Innenverkleidungsbauteil in der Figur 4a, hergestellt nach dem Verfahren gemäß der Figuren 1a, b;
Figur 4c ein Querschnitt durch das Innenverkleidungsbauteil in der Figur 4a, hergestellt nach dem Verfahren gemäß der Figuren 2a, b oder nach dem Verfahren gemäß der Figuren 3a, b;
Figur 5a - d jeweils eine Draufsicht auf eine Werkzeugfläche, welche zur Strukturierung der Sichtseite des Innenverkleidungsbauteils dient.

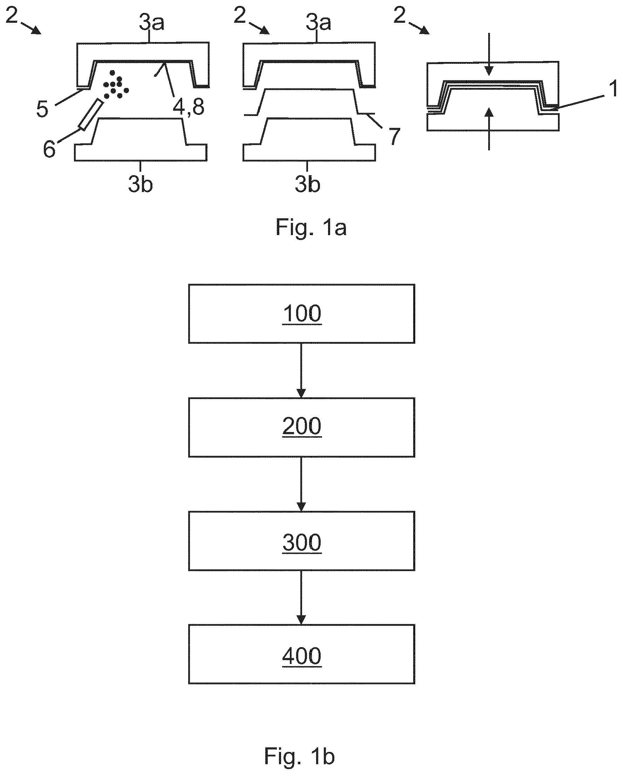

Die Figur 1 a zeigt in einer schematischen Darstellung Verfahrensschritte zur Herstellung eines Innenverkleidungsbauteils 1. In der Figur 1a ist ein Werkzeug 2 gezeigt, welches zwei Werkzeughälften 3a, b aufweist. Bei abgewandelten Ausführungsformen können auch mehr Werkzeugteile verwendet werden. Das Werkzeug ist in einer Presse angeordnet, wobei die Presse wahlweise extern einen Druck aufbringen kann, um die Werkzeughälften 3a, b zusammenzudrücken.

In einem ersten Verfahrensschritt 100 gemäß dem Flussdiagramm in der Figur 1 b wird eine Werkzeugfläche 4 der Werkzeughälfte 3a mit einem formlosen Lack zur Bildung eines Schichtabschnitts 5 bedeckt. Die Werkzeugfläche 4 kann als integraler Bestandteil der Werkzeughälfte 3 a ausgebildet sein. Alternativ hierzu ist in das Werkzeug 2, insbesondere in der Werkzeughälfte 3 a, ein Einsatzteil 8 zum Beispiel aus Keramik eingelegt, wobei die Werkzeugfläche 4 durch das Einsatzteil 8 gebildet wird.

Der formlose Lack ist als ein Pulverlack ausgebildet und wird beispielsweise mit einer Sprühpistole 6 aufgebracht. Bei dem gezeigten Ausführungsbeispiel wird der formlose Lack auf die obere Werkzeughälfte 3 a aufgebracht, bei abgewandelten Ausführungsformen ist es auch möglich, dass die untere Werkzeughälfte 3 b damit bedeckt wird. In einem nächsten Verfahrensschritt 200 wird der formlose Lack teilweise ausgehärtet und/oder teilvernetzt, um den Schichtabschnitt 5 zu bilden. Durch das Auftragen auf die Werkzeugfläche 4 erhält der Lack seine Form, nämlich die Form, die der Werkzeugfläche 4 folgt bzw. durch diese vorgegeben oder gebildet ist.

Der formlose Lack ist als Pulverlack ausgebildet und insbesondere als ein Hybrid-Pulverlacke, also eine Mischung von Epoxid- und Polyesterharze realisiert.

In dem Verfahrensschritt 200 wird der formlose Lack auf eine Temperatur von 100 °C gebracht und/oder der formlose Lack teilvernetzt und/oder geliert. Vorzugsweise ist bei dem Verfahrensschritt 200 das Werkzeug 2 geöffnet.

In einem Verfahrensschritt 300 wird ein Halbfabrikat 7 eingelegt, wobei das Halbfabrikat 7 bereits eine Endform aufweist. Somit findet keine Umformung des Halbfabrikats 7 in dem Werkzeug 2 statt, wenn dieses später geschlossen wird, siehe unten.

Beispielsweise ist das Halbfabrikat 7 als ein bereits vorgeformtes Sandwich-Bauteil ausgebildet. Bevorzugt weist das Sandwich-Bauteil mehrere Lagen auf. Bevorzugt weist das Sandwich-Bauteil eine oder mehrere Decklagen und/oder eine oder mehrere Rücklagen ausgebildet als Prepreg-Lagen und einen Honigwabenkern (Honeycomb Core) als Kernmaterial/Zwischenlage auf.

Alternativ kann das Halbfabrikat auch als vorgeformtes Schaumbauteil vorliegen. Das Schaumbauteil als Halbfabrikat kann sowohl eine zuvor umgeformte Schaumplatte (extrudierter Schaumblock: Schaumplatte als Schnittware) aber auch ein Formteil, urgeformt aus Partikelschaum aus einem Formteilautomaten darstellen. Auch kann das Halbfabrikat aus Schaum mit einer oder mehreren Decklagen und/oder mit einer oder mehreren Rücklagen verbunden sein. Somit kann auch ein Halbfabrikat aus Schaum als ein Sandwich- oder Halbsandwich-Bauteil vorliegen.

In einem Verfahrensschritt 400 wird das Halbfabrikat 7 mit dem Schichtabschnitt 5 verbunden und der Schichtabschnitt 5 ausgehärtet und/oder vollvernetzt. Hierzu wird das Werkzeug 2 geschlossen, also die Werkzeughälften 3a,b zusammengefahren. Dabei erfolgt keinerlei Umformung am Halbfabrikat 7. Der eventuelle Druck im Werkzeug 2 dient alleine dazu, den Schichtabschnitt 5 mit dem Halbfabrikat 7zu verbinden. Das Werkzeug 2 bietet dabei den Vorteil, dass das Anlegen /Verbinden passgenau erfolgen kann und eine vollflächige mechanische Unterstützung des Schichtabschnittes 5 erfolgt bzw. dieser vollflächig an das Halbfabrikat angelegt oder angedrückt werden kann. Durch die Aushärtung des Schichtabschnitts 5 nach dem Verbinden mit dem Halbfabrikat 7 wird erreicht, dass die stoffschlüssige Verbindung aufgrund des im teilvernetzten, teilausgehärteten und/oder gelierten Zustand des Schichtabschnitts 5 sehr belastbar ausgeprägt ist. Die Verbindung zwischen Halbfabrikat 7 und Schichtabschnitt 5 erfolgt unter Druck. Dies wird insbesondere durch ein Schließen des Werkzeugs 2 mit Druckbeaufschlagung und mit Temperaturbeaufschlagung umgesetzt.

Dadurch, dass der formlose Lack bereits im Verfahrensschritt 200, das heißt vor dem Einlegen des Halbfabrikats 7, erwärmt wird, kann eine Strukturierung der Werkzeugfläche 4 auf den Schichtabschnitt 5 in hoher Qualität übertragen, insbesondere abgeformt werden. Die Strukturierung ist dabei z.B. als Textur 11a,b (siehe unten), Muster, Riffelung, Wellung etc. ausgebildet.

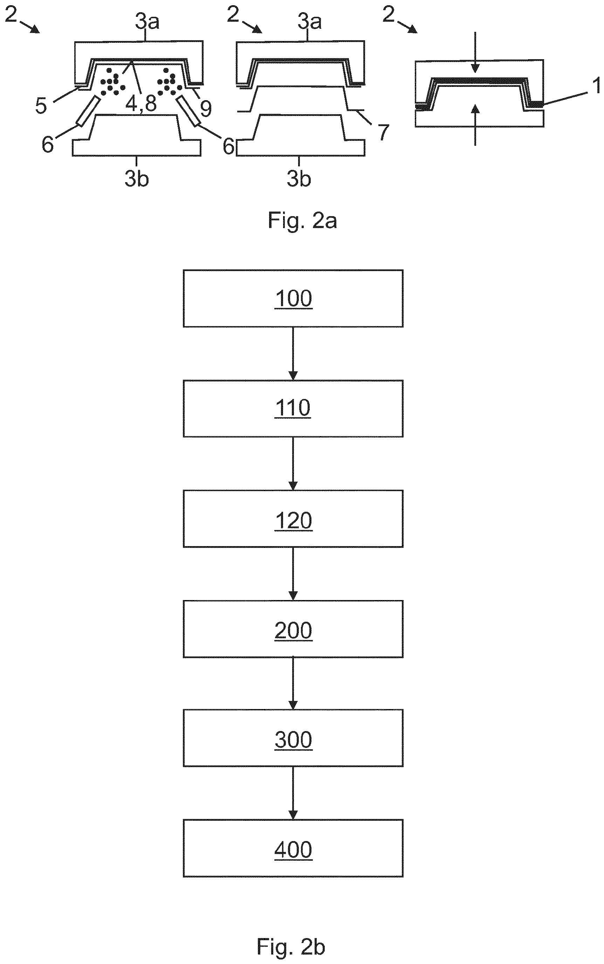

Die Figur 2a zeigt in einer schematischen Darstellung eine alternative Ausgestaltung des Verfahrens in den Figuren 1 a, b. Figur 2 b zeigt das entsprechende Flussdiagramm. In dem ersten Verfahrensschritt 100 wird die Werkzeugfläche 4 der Werkzeughälfte 3 a mit dem formlosen Lack zur Bildung des Schichtabschnitts 5 bedeckt. Der Verfahrensschritt 100 entspricht dem vorhergehenden Verfahrensschritt.

In einem nachfolgenden Verfahrensschritt 110 wird der formlose Lack vollvernetzt und/oder vollständig zu dem Schichtabschnitt 5 ausgehärtet. In einem Verfahrensschritt 120 wird nochmals formloser Lack, der von dem ersten Lack aus dem Verfahrensschritt 110 verschieden ist, als eine Zwischenschicht 9 aufgebracht. Der formlose Lack kann als Pulverlack, insbesondere Pulverklarlack, ausgebildet sein.

Nachfolgend wird in dem Verfahrensschritt 200 der formlose Lack (beide Schichten unterschiedlicher Lacke) auf eine Temperatur von 100 °C gebracht und/oder der formlose Lack teilvernetzt und/oder geliert. Vorzugsweise ist bei dem Verfahrensschritt 200 das Werkzeug 2 geöffnet. Damit ist der Schichtabschnitt 5 vollständig ausgehärtet/vernetzt und die Zwischenschicht 9 nur teilweise ausgehärtet/vernetzt. Die Verfahrensschritte 300 und 400 erfolgen wie im vorhergehenden Ausführungsbeispiel beschrieben.

Durch das vollständige Aushärten/Vernetzen des Schichtabschnitts 5 in dem Verfahrensschritt 110 wird die Abformung der Werkzeugfläche 4 fixiert, so dass diese in höherer Qualität abgeformt ist. So sind z.B. die Texturen 11a,b (siehe unten) in hoher Qualität in den Schichtabschnitt eingebracht bzw. dort nun dauerhaft vorhanden. Die Zwischenschicht 9 wirkt dagegen als Klebeschicht zwischen dem Schichtabschnitt 5 und dem Halbfabrikat 7. Für die Zwischenschicht 9 kann statt dem formlosen Lack auch eine konventionelle Klebeschicht verwendet werden. Auch hier finden wieder keinerlei Umformungen am Halbfabrikat 7 statt. Das Werkzeug 2 dient wieder lediglich zur passgenauen und flächigen Anbringung des Schichtabschnittes 5 am Halbfabrikat 7 unter Zwischenlage der Zwischenschicht 9.

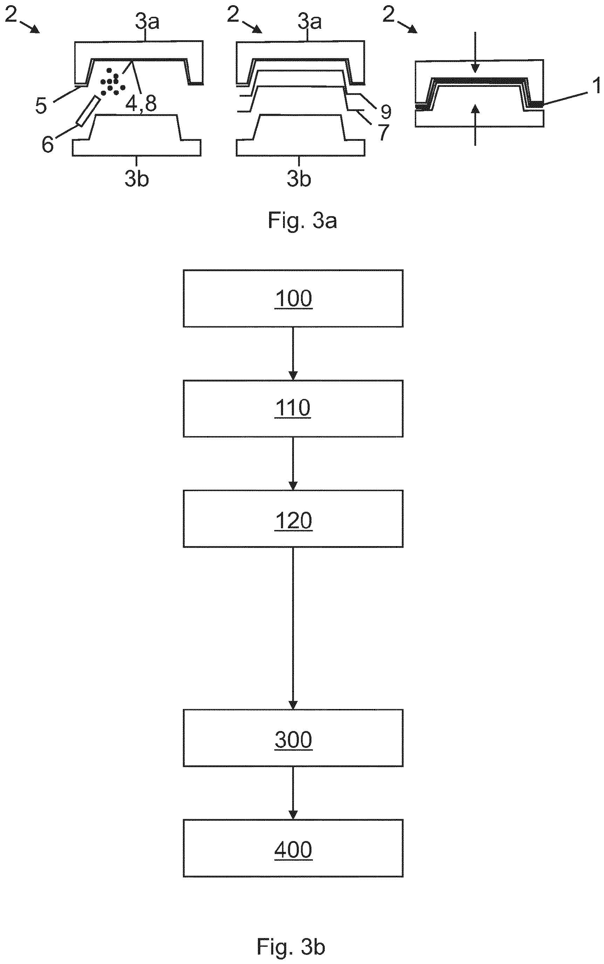

Die Figur 3a zeigt in einer schematischen Darstellung eine alternative Ausgestaltung des Verfahrens in den Figuren 1 a, b. Figur 3 b zeigt das entsprechende Flussdiagramm. In dem ersten Verfahrensschritt 100 wird die Werkzeugfläche 4 der Werkzeughälfte 3 a mit dem formlosen Lack zur Bildung des Schichtabschnitts 5 bedeckt. Der Verfahrensschritt 100 entspricht dem vorhergehenden Verfahrensschritt.

In einem nachfolgenden Verfahrensschritt 110 wird der formlose Lack vollvernetzt und/oder vollständig zu dem Schichtabschnitt 5 ausgehärtet.

In einem Verfahrensschritt 120 wird ein Klebefilm oder eine Prepreg-Schicht als Zwischenschicht 9 auf den vollvernetzten Schichtabschnitt 5 und/oder auf das vorgefertigte Halbfabrikat 7 auflaminiert (das Auflaminieren auf das Halbfabrikat 7 kann zeitlich auch vor oder parallel zu dem Schritt 110 erfolgen) oder zwischen diesen eingelegt.

In einem Verfahrensschritte 300 wird das Halbfabrikat 7 eingelegt, welches wie zuvor beschrieben ausgebildet ist. In einem Verfahrensschritt 400 wird das Halbfabrikat 7 mit dem Schichtabschnitt 5 über die Zwischenschicht 9 verbunden. Dabei wird die Prepreg-Schicht als Zwischenschicht 9 in der Form gegebenenfalls an die Kontur des Schichtabschnitts 5 und/oder des Halbfabrikats 7 angepasst. Die Verbindung zwischen Halbfabrikat 7 und Schichtabschnitt 5 über die Zwischenschicht 9 erfolgt unter Druck. Dies wird insbesondere durch ein Schließen des Werkzeugs 2 mit Druckbeaufschlagung und mit Temperaturbeaufschlagung umgesetzt. Nur im Falle der Konturanpassung der Zwischenschicht 9 erfolgt an dieser überhaupt eine Umformung beim Schließen des Werkzeugs 2. Die dabei entstehenden Umformkräfte sind jedoch so gering, dass der Schichtabschnitt 5 dabei keinerlei Schaden nimmt oder Qualitätseinbußen an diesem entstehen. Das Halbfabrikat 7 wird auch in diesem Fall nicht umgeformt.

In den vorhergehenden Figuren wurde das Verfahren jeweils mit einer Presse dargestellt. Alternativ kann jedoch ein Vakuumverfahren eingesetzt werden, wobei die Werkzeughälfte 3 a als Formhälfte ausgebildet ist und der Schichtaufbau mit dem Halbfabrikat 7 etc. über eine Silikonhaube und Vakuumbeaufschlagung an die Formhälfte gepresst wird. Auch hier findet keinerlei Umformung am Halbfabrikat 7 statt.

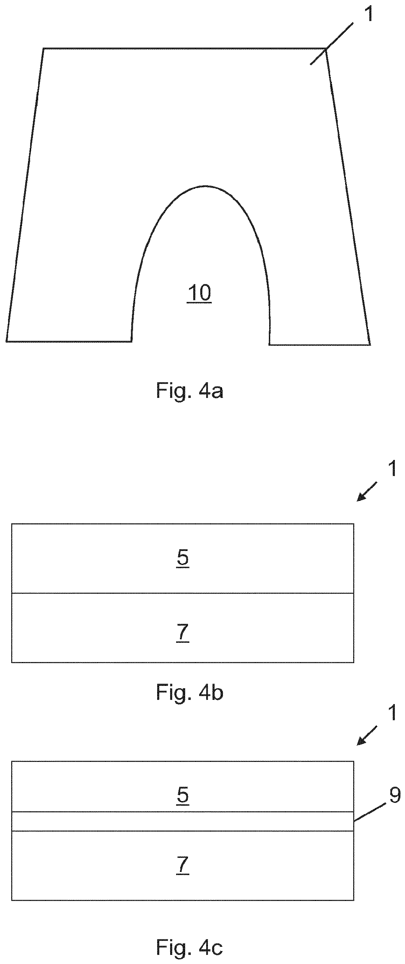

Die Figur 4a zeigt eine Draufsicht auf das Innenverkleidungsbauteil 1, wobei das Innenverkleidungsbauteil 1 bei diesem Ausführungsbeispiel als ein Innenverkleidungsbauteil und/oder Wandpaneel für ein Flugzeug ausgebildet ist. Insbesondere ist das Innenverkleidungsbauteil 1 als ein Flächenbauteil ausgebildet mit einer Fläche größer als 0,5 m². Das Innenverkleidungsbauteil 1 weist insbesondere einen Ausschnitt 10 für ein Flugzeugfenster auf. Das Innenverkleidungsbauteil 1 weist als Grundkörper das Halbfabrikat 7 auf. Es ist möglich, dass nach der Verbindung von dem Schichtabschnitt 5 und dem Halbfabrikat 7 noch weitere Bearbeitungsschritte, wie zum Beispiel ein seitliches Beschneiden etc. durchgeführt werden.

In der Figur 4b ist ein Querschnitt durch das Innenverkleidungsbauteil 1 gezeigt, wobei das Innenverkleidungsbauteil 1 durch die erste Verfahrensalternative gefertigt ist. Es ist zu erkennen, dass der aufgebrachte Schichtabschnitt 5 auf das Halbfabrikat 7 unmittelbar mit dem Halbfabrikat 7 kontaktiert. Der aufgebrachte Schichtabschnitt weist beispielsweise eine Schichtdicke von 120 µm auf.

In der Figur 4c ist ein Querschnitt durch das Innenverkleidungsbauteil 1 gezeigt, wobei das Innenverkleidungsbauteil 1 durch die zweite oder dritte Verfahrensalternative gefertigt ist. Hier ist der Schichtabschnitt 5 und ergänzend die Zwischenschicht 9 gezeigt, wobei die Zwischenschicht 9 den Schichtabschnitt 5 mit dem Halbfabrikat 7 flächig verbindet. Der Schichtabschnitt 5 nimmt ca. 80 %, die Zwischenschicht 9 die verbleibenden 20 % der Gesamtschichtdicke ein. Beispielsweise weist der Schichtabschnitt 5 eine Schichtdicke von 90 µm und die Zwischenschicht 9 eine Schichtdicke von 20 µm auf.

Es ist vorgesehen, dass die Gesamtschichtdicke, also für die Verfahrensalternative gemäß der Figuren 1a,b die Schichtdicke des Schichtabschnitts 5 und für die Verfahrensalternative gemäß der Figuren 2a,b die Schichtdicke von Schichtabschnitt 5 und Zwischenschicht 9, kleiner als 150 µm ausgebildet ist, um gängigen Brandschutzverordnungen für ein Flugzeug zu genügen.

Für die Verfahrensalternative gemäß der Figuren 3 a, b umfasst die Zwischenschicht 9 gemäß der Figur 4c die Prepreg-Schicht. Bei dieser Verfahrensalternative ist die Dicke bis maximal 300 µm möglich.

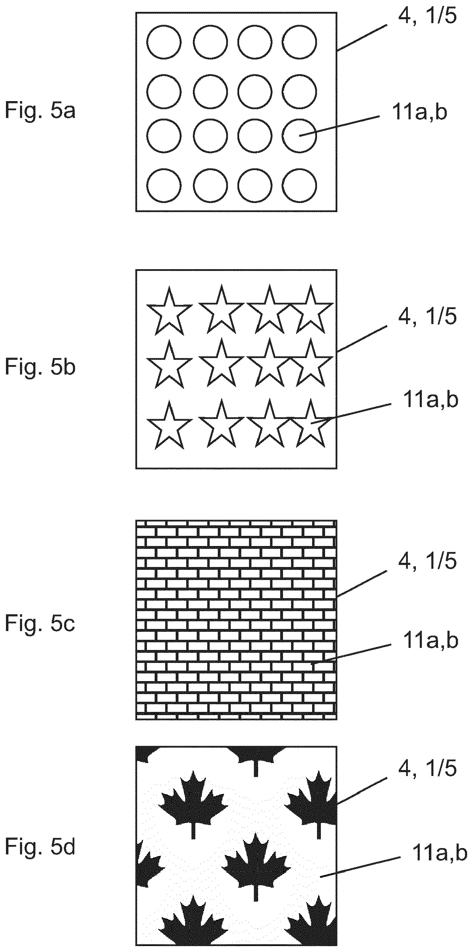

In den Figuren 5a bis d sind verschiedene Ausführungsbeispiele für Texturen 11a,b dargestellt. An der Werkzeugfläche 4 sind diese als Textur-Negativ 11a ausgebildet, z.B. durch Erhebungen oder Vertiefungen in der Werkzeugfläche. Diese Textur-Negative 11a ergeben durch Formung des Lacks bzw. des Schichtabschnittes 5 ein jeweiliges Textur-Positiv 11b am Lack und damit an der Sichtseite des Schichtabschnitts 5 bzw. des Innenverkleidungsbauteils 1. Die Texturen 11a,b können als geometrische Figuren, als Zahlen, Zeichen, Symbole, Imitate von Stoffen oder anderen Oberflächen ausgebildet sein. Vorzugsweise ist eine maximale Texturtiefe kleiner als 100 µm, insbesondere kleiner als 80 µm und/oder mindestens 20 µm, vorzugsweise mindestens 30µm ausgebildet. Die Texturierung wirkt sich auf den Lack bzw. den Schichtabschnitt 5 aus. Das Halbfabrikat 5 wird dabei nicht umgeformt.

Der Vorteil bei dem Verfahren liegt insbesondere darin, dass die Texturen 11a der Werkzeugfläche 4 durch den Schichtabschnitt 5 in hoher Qualität als Texturen 11b abgeformt werden können und durch das Einlegen des Halbfabrikats 7 in der Endform (d.h. ohne weitere Umformung des Halbfabrikats 7) die abgeformten Texturen 11b bei dem Verbinden von dem Schichtabschnitt 5 mit dem Halbfabrikat 7 nicht durch dessen Umformung bzw. die dabei auftretenden Kräfte und Bewegungen beschädigt werden. Dadurch kann ein Innenverkleidungsbauteil 1 mit hochwertigen Texturen 11b an der Sichtseite hergestellt werden.

### Bezugszeichenliste

- 1: Innenverkleidungsbauteil
- 2: Werkzeug
- 3a,b: Werkzeughälften
- 4: Werkzeugfläche
- 5: Schichtabschnitt
- 6: Sprühpistole
- 7: Halbfabrikat
- 8: Einsatzteil
- 9: Zwischenschicht
- 10: Ausschnitt
- 11a,b: Negativ der Texturen / Positiv der Texturen bzw. abgeformte Texturen

## Patentansprüche

1. Verfahren zur Herstellung eines Innenverkleidungsbauteils (1),
wobei in einem Werkzeug (2) eine Werkzeugfläche (4) mit einem formlosen Lack zur Bildung eines Schichtabschnitts (5) bedeckt wird, wobei der formlose Lack nach einer Aushärtung eine Sichtseite des Innenverkleidungsbauteils (1) bildet,
wobei in das Werkzeug (2) ein Halbfabrikat (7) des Innenverkleidungsbauteils (1) eingelegt und ohne das Halbfabrikat (7) dabei umzuformen mit dem Schichtabschnitt (5) verbunden wird, um das Innenverkleidungsbauteil (1) zu bilden.

2. Verfahren nach Anspruch 1, **dadurch gekennzeichnet, dass** der Lack als ein Pulverlack ausgebildet ist.

3. Verfahren nach Anspruch 1 oder 2, **dadurch gekennzeichnet, dass** der Lack vor dem Einlegen des Halbfabrikats (7) teilausgehärtet oder vollausgehärtet ist.

4. Verfahren nach einem der vorhergehenden Ansprüche, **dadurch gekennzeichnet, dass** der Schichtabschnitt (5) unmittelbar mit dem Halbfabrikat (7) verbunden wird.

5. Verfahren nach einem der Ansprüche 1 bis 3, **dadurch gekennzeichnet, dass** zwischen dem Schichtabschnitt (5) und dem Halbfabrikat (7) mindestens oder genau eine Zwischenschicht (9) angeordnet ist.

6. Verfahren nach Anspruch 5, **dadurch gekennzeichnet, dass** die Zwischenschicht (9) als ein weiterer Pulverlack oder als ein Pulverklarlack ausgebildet ist.

7. Verfahren nach Anspruch 6, **dadurch gekennzeichnet, dass** die Zwischenschicht (9) geliert und/oder teilvernetzt und/oder teilausgehärtet ist, wenn das Halbfabrikat (7) mit dem Schichtabschnitt (5) verbunden wird.

8. Verfahren nach Anspruch 6, **dadurch gekennzeichnet, dass** in einem Verfahrensschritt (100) der formlose Lack als Pulverlack auf die Werkzeugfläche (4) aufgebracht und nachträglich ausgehärtet wird und in einem weiteren Verfahrensschritt (120) Pulverlack oder Pulverklarlack auf den Schichtabschnitt (5) als Zwischenschicht (9) aufgebracht und nachträglich geliert und/oder teilvernetzt wird und das Halbfabrikat (7) auf die gelierte bzw. teilvernetzte Zwischenschicht (9) aufgelegt wird, um dieses mit dem Schichtabschnitt (5) zu verbinden.

9. Verfahren nach Anspruch 5, **dadurch gekennzeichnet, dass** die Zwischenschicht (9) als eine Prepreg-Schicht ausgebildet ist.

10. Verfahren nach Anspruch 9, **dadurch gekennzeichnet, dass** in einem Verfahrensschritt (100) der formlose Lack als Pulverlack auf die Werkzeugfläche (4) aufgebracht und nachträglich ausgehärtet wird und in einem weiteren Verfahrensschritt (120) eine Prepreg-Schicht auf den Schichtabschnitt (5) oder auf das Halbfabrikat (7) als Zwischenschicht (9) aufgebracht und der Schichtabschnitt (5) über die Zwischenschicht (9) mit dem Halbfabrikat (7) verbunden wird.

11. Verfahren nach einem der vorhergehenden Ansprüche, **dadurch gekennzeichnet, dass** die Werkzeugoberfläche (4) Texturen (11a) aufweist, welche in den Schichtabschnitt (5) als Texturen (11b) abgeformt werden.

12. Verfahren nach einem der vorhergehenden Ansprüche, **dadurch gekennzeichnet, dass** das Werkzeug (2) ein Einsatzteil (8) aufweist, wobei das Einsatzteil (8) die Werkzeugfläche (4) bildet.

13. Verfahren nach Anspruch 12, **dadurch gekennzeichnet, dass** das Einsatzteil (8) eine Keramikschicht aufweist oder als Keramikbauteil mit der Keramikschicht ausgebildet ist, wobei die Keramikschicht die Werkzeugfläche (4) bildet.

14. Innenverkleidungsbauteil (1) für ein Flugzeug, wobei das Innenverkleidungsbauteil einen Grundkörper, wobei der Grundkörper aus einem Halbfabrikat (7) gebildet ist, und einen Schichtabschnitt (5) aufweist,
**dadurch gekennzeichnet, dass** der Schichtabschnitt (5) eine Lackschicht aufweist, wobei eine Sichtseite der Lackschicht einen Abdruck einer Werkzeugfläche (4) aufweist und der Schichtabschnitt (5) mit einer Verbindungsseite des Halbfabrikats (7) verbunden ist und/oder **dadurch gekennzeichnet, dass** das Innenverkleidungsbauteil (1) nach dem Verfahren nach einem der Ansprüche 1 bis 11 gefertigt ist.

15. Innenverkleidungsbauteil (1) nach Anspruch 14, **dadurch gekennzeichnet, dass** das Innenverkleidungsbauteil (1) als ein Wandpaneel ausgebildet ist.
